# EUROPÄISCHE PATENTSCHRIFT

(11) **EP 1 806 993 B1**
(45) Veröffentlichungstag und Bekanntmachung des Hinweises auf die Patenterteilung: **26.05.2010**
(21) Anmeldenummer: 05786504.0
(22) Anmeldetag: 06.10.2005
(51) Int. Cl.: A47J 27/14

(54) **VORRICHTUNG ZUM KIPPEN EINES MIT NAHRUNGSMITTELN FÜLLBAREN BEHÄLTERS IN EINER GROSSKÜCHE UND STEUEREINRICHTUNG HIERFÜR**
DEVICE FOR TILING A CONTAINER WHICH CAN BE FILLED WITH FOODSTUFFS IN A LARGE-SCALE CATERING ESTABLISHMENT AND CONTROL DEVICE THEREFOR
SYSTEME POUR BASCULER UN CONTENANT POUVANT ETRE REMPLI D'ALIMENTS DANS UNE CUISINE PROFESSIONNELLE ET DISPOSITIF DE COMMANDE ASSOCIE

(30) Priorität: 07.10.2004 CH 16552004
(43) Veröffentlichungstag der Anmeldung: 18.07.2007
(73) Patentinhaber: Elro (Holding ) AG, 5620 Bremgarten (CH)
(72) Erfinder: STEIGER, Patrick, CH-5612 Villmergen (CH)
(74) Vertreter: Liebetanz, Michael
(86) Internationale Anmeldenummer: PCT/CH2005/000585
(87) Internationale Veröffentlichungsnummer: WO 2006/037254

(56) Entgegenhaltungen:
- DE-A1- 3 411 564
- DE-U1- 9 309 709
- US-A- 3 744 475

## Beschreibung

Die Erfindung betrifft eine Vorrichtung zum Kippen eines mit Nahrungsmitteln füllbaren Behälters in einer Grossküche und eine Steuereinrichtung hierfür.

Aus dem Stand der Technik sind eine Vielzahl von solchen Vorrichtungen bekannt, die ein Lager aufweisendes Gestell umfassen, in das der besagte Behälter verkippbar einhängbar ist, wobei der Behälter mit einem Antriebsmechanismus versehen ist, mit dem sein Neigungswinkel zwischen zwei Endpositionen verstellbar ist.

Dabei besteht der Antriebsmechanismus üblicherweise aus einer Zahnradübersetzung oder Hebelgetriebe, die mit einem Handrad verbunden ist. Durch das Drehen des mechanischen Handrades wird der Behälter in seiner Neigung verstellt.

Im Grossküchenbereich handelt es sich dabei um Behälter, die gefüllt ein hohes Gewicht annehmen können. Das Handrad ist entsprechend gross und ist breiter als die Konsolenbreite, das heisst, es steht seitlich über den Rand des Gestells über. Diese Ausgestaltung scheint beim Stand der Technik notwendig, damit die Kraft am Handrad nicht zu gross wird. Beim Stand der Technik ist daher ein Gerät nie in einer Ecke platzierbar. Der Benutzer des Gerätes benötigt zudem zur Betätigung des Handrades noch einen weiteren seitlichen Raum für seinen Arm, um die Drehung des Handrades ausführen zu können.

Problematisch ist bei dem besagten Antrieb in Gestalt eines mechanischem Handrades, dass der Bediener grosse Kräfte auf das Kippgetriebe bringen kann. Die Mechanik wird damit sehr belastet und ist daher störanfällig, insbesondere im Bereich der Endanschläge und vor allem, wenn der Behälter gefüllt ist und dementsprechend ein grosses Drehmoment mit sich bringt.

Schliesslich sind die überstehenden Handräder und Betätigungselemente eine Gefahr für die in der Küche arbeitenden Benutzer und sind gegenüber Beschädigungen anfällig, wenn zum Beispiel Rollwagen durch die Küche geschoben werden.

Das Dokument US 3 744 475 A beschreibt eine Vorrichtung, die als nützlich für das Verständnis der Erfindung angesehen werden kann.

Ausgehend von diesem Stand der Technik liegt der Erfindung die Aufgabe zugrunde, eine eingangs genannte Vorrichtung so auszugestalten, dass sich die Sicherheit für die Benutzer erhöht und sich die Einsatzsicherheit der Vorrichtung verbessert.

Diese Aufgabe wird erfindungsgemäss durch die Merkmale des Anspruchs 1 gelöst.

Weitere vorteilhafte Ausführungsformen sind in den Unteransprüchen niedergelegt.

Die Erfindung wird nachfolgend unter Bezugnahme auf die beigefügten Zeichnungen anhand von Ausführungsbeispielen näher beschrieben. Es zeigen:
- Fig. 1: eine schematische Draufsicht auf den Bedienteil einer Vorrichtung nach dem Stand der Technik,
- Fig. 2: eine schematische Draufsicht auf den Bedienteil einer Vorrichtung gemäss einem Ausführungsbeispiel der Erfin- dung,
- Fig. 3: eine schematische perspektivische Ansicht auf eine Vor- richtung gemäss einem Ausführungsbeispiel in der einen, vertikalen Endposition, und
- Fig. 4: eine schematische perspektivische Ansicht auf eine an- dere Vorrichtung gemäss einem Ausführungsbeispiel in der anderen, gekippten Endposition.

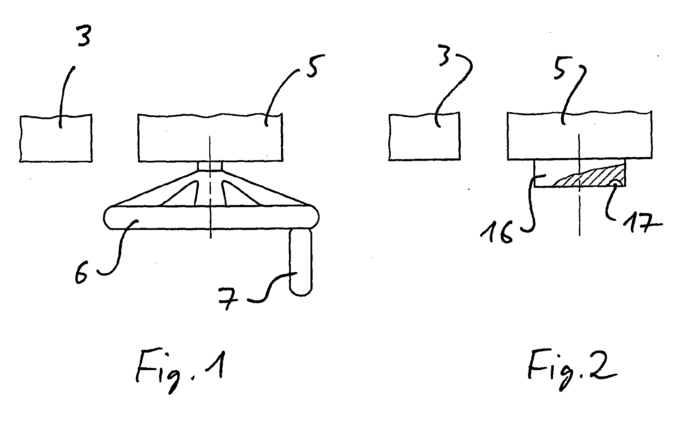

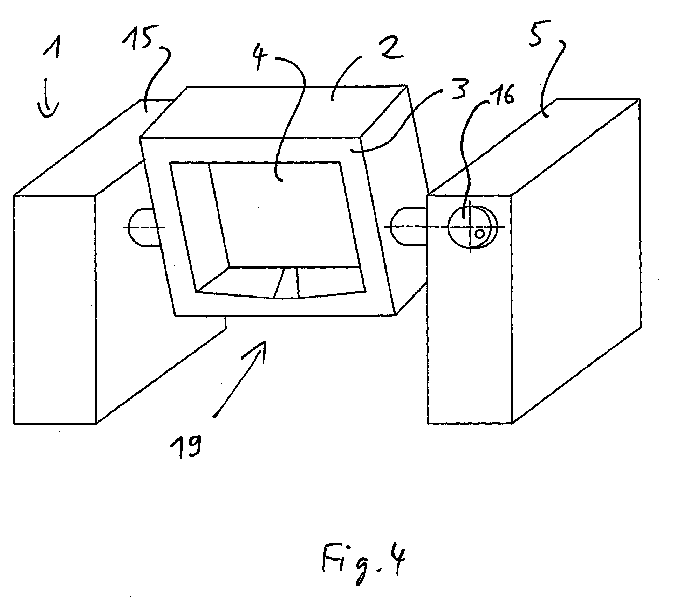

Die Fig. 1 zeigt eine schematische Draufsicht auf den Bedienteil einer Vorrichtung nach dem Stand der Technik. Das Küchengerät 1, das in der Fig. 4 in seiner Vollständigkeit dargestellt ist, verfügt über einen eckigen kippbaren Behälter 2. Dieser hat einen Innenraum 4, der von einem Rand 3 umgeben ist, der in der vertikalen Position 9 neben dem rechten Gestell 5 zu sehen ist. Nach vorne steht ein Handrad 6 über. Das Handrad 6 steht insbesondere auch seitlich über das rechte Gestell 5 über, jedenfalls auch in dem Fall, wenn die antreibende Mechanik, das Getriebe, in diesem Gestell 5 angeordnet ist. Damit sind die eingangs genannten Nachteile verbunden.

Die Fig. 2 zeigt eine schematische Draufsicht auf den Bedienteil einer Vorrichtung gemäss einem Ausführungsbeispiel der Erfindung, bei dem ein elektronisches Handrad 16 verwendet wird. Der Ausdruck elektronisches Handrad 16 bedeutet nach der Zeichnung den Bedienteil der Vorrichtung. Es ist klar, dass der Antriebsmechanismus anders, insbesondere mit einem elektrischen Antrieb und einer in den Zeichnungen nicht dargestellten Steuerschaltung ausgestaltet ist. Die entsprechende Beschreibung folgt nun. Das elektronische Handrad 16 verfügt vorteilhafterweise über ein Betätigungselement 17, ähnlich zu der exzentrisch angeordneten Bedienstange 7 beim Stand der Technik. Dieses Betätigungselement 17 ist in den Fig. eine für einen Finger vorgesehene Mulde zum Drehen des zylindrischen Handrades 16. Es kann aber auch eine geriffelte Mantelfläche des Handrades 16 sein oder eine raue Oberfläche des Handrades 16 an sich, obwohl entsprechende Ausgestaltungen schwieriger zu reinigen sind. Wesentlich ist, dass aufgrund des hinter dem elektronischen Handrad 16 stehenden elektrischen Antriebes keine grossen Kräfte auf das Handrad 16 einwirken müssen, um eine Funktion auszulösen. Damit kann die Bauhöhe sehr klein sein, beispielsweise ein zehntel bis zur Hälfte des Durchmessers des Handrades, welches beispielsweise einen Durchmesser zwischen 5 und 20 Zentimeter aufweisen kann.

Ferner bestehen bei einer glatten Oberfläche mit einer Betätigungsmulde 17 keine Schmutzecken mehr, in denen sich Verunreinigungen sammeln können.

Anstelle eines Handrades 16 können auch zwei Bedienknöpfe wie in den Ansprüchen definiert für die beiden Steuerrichtungen vorgesehen sein, wobei ein längeres zeitliches Drücken der Knöpfe einer höheren Geschwindigkeit entspricht (im Rahmen der vorgegebenen Maximalgeschwindigkeit in Abhängigkeit von der Position des Behälters 2 oder 12); oder es können eine Reihe von Tastflächen wie in den Ansprüchen definiert nebeneinander, beispielsweise hinter einer CNS-Folie vorgesehen sein, wobei bei Betätigung eines Kontaktes je nach gewähltem Ort zwischen einer Maximalgeschwindigkeit in die eine Drehrichtung bis zu einer Maximalgeschwindigkeit in die andere Drehrichtung die entsprechende Geschwindigkeit gewählt werden kann, wobei ein Drücken in die Mitte oder einen gesonderten Stopkontakt der Antriebsmotor stoppt. Es ist bei solch einer Bedieneinheit auch möglich, dass ein weiterer gesonderter Kontakt eine Schüttelfunktion auslöst, das heisst ein Oszillieren des Behälters 2 oder 12 um die bestehende Kippposition.

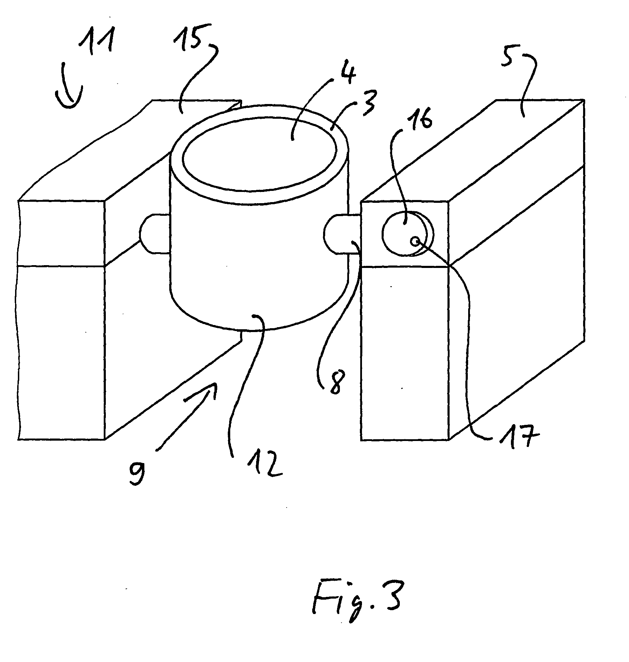

Die Fig. 3 zeigt eine schematische perspektivische Ansicht auf eine Vorrichtung 11 gemäss einem Ausführungsbeispiel in der einen, vertikalen Endposition 9. In dieser hier nahezu vertikalen Endposition 9 ist der Innenraum 4 des kippbaren Behälters 12 im wesentlichen senkrecht nach oben offen. Jeweils ein Tragarm 8 wird in die in den seitlichen Gestellen 5 und 15 vorgesehenen Lager gesteckt. Auf der Antriebsseite, die über das Gestell 5 realisiert wird, wird das Drehmoment des Antriebs auf den Tragarm 8 übertragen.

Die Fig. 4 zeigt eine schematische perspektivische Ansicht auf eine andere Vorrichtung 2 gemäss einem Ausführungsbeispiel in der anderen, gekippten Endposition 19, in der der Behälterinnenraum 4 geleert ist und beispielsweise ausspülbar ist.

Die Funktion des elektronischen Handrades 16 ist wie folgt. Ein Drehen des Handrades 16 in eine Richtung löst ein Bewegungssignal aus, welches in die Steuereinrichtung geleitet wird. Je nach Drehrichtung des Handrades 16 bedeutet das Bewegungssignal "Aufrichten" oder "Verkippen". An den Tragarmen 8 sind neben Anschlägen Positionssensoren angeordnet, die an die besagte Steuereinrichtung die Drehposition des Behälters 2 oder 12 mitteilen. Dabei kann es sich um Sensoren handeln, die nur die Endpositionen 9 oder 19 oder das Herannahen an die Endpositionen 9, 19 weitermelden oder es können intermittierend oder kontinuierlich die absolute Drehposition erfassende Sensoren sein. Zusätzlich kann die Steuereinrichtung auch mit Sensoren verbunden sein, die die durch die Antriebe fliessenden Ströme messen und beispielsweise bei Überschreiten von vorgegebenen Schwellwerten die Antriebe abschalten.

Wenn der Behälter 2 oder 12 in einer Endposition 9 oder 19 steht, so wird das weiter in diese Drehrichtung weisende Bewegungssignal in der Steuereinrichtung ignoriert. Ansonsten gibt die Steuereinrichtung ein Betätigungssignal ab, mit dem der die Drehung des Tragarmes 8 bewirkende Elektromotor - gegebenenfalls über ein Getriebe - angesteuert wird. Diese und andere Signale können ebenfalls bei anderen Bedienelementen als dem Handrad 16 ausgelöst werden.

Vorteilhafterweise kann durch schnellere Drehung des Handrades 16 eine schnellere Verkippung (oder Aufrichten) des Behälters 2 oder 12 erreicht werden. Dabei wird aber ebenso Vorteilhafterweise die Drehgeschwindigkeit des die Drehachse bildenden Tragarmes 8 begrenzt, insbesondere kann ein maximales Geschwindigkeitsprofil vorgegeben sein, welches winkelabhängig ist, beispielsweise ähnlich zu Wahrscheinlichkeitsverteilungen. Das Geschwindigkeitsprofil kann auch asymmetrisch sein, insbesondere bei grösseren Kippwinkeln nur eine kleinere Geschwindigkeit zulassen. Insbesondere kann die maximale Winkelgeschwindigkeit beim Annähern des Drehwinkels des Behälters 2, 12 an die Endpositionen 9, 19 stetig gegen Null gehen, so dass der Motor in der jeweiligen Endposition 9, 19 stoppt, selbst wenn der Bediener das Handrad 16 weiterdreht. Dieser Umstand kann ihm von der Steuereinrichtung durch ein akustisches Signal mitgeteilt werden.

Die Endpositionen können Positionsvorgaben oder Anschläge sein, es ist auch möglich Zwischenpositionen zu definieren und in entsprechende Speicherplätze der Steuereinrichtung abzulegen, um auch diese definiert anfahren zu können. Schliesslich können mechanische Endanschläge vorgesehen sein, die mit Notabschaltsensoren verbunden sind.

In der Grossküche stehen häufig mehrerer solcher Vorrichtungen nebeneinander. Der Bediener muss beim Stand der Technik dann jeweils um das Handrad aussen herumgehen, um sich in der richtigen Position vor die nächste Vorrichtung zu stellen. Er stösst mit einen Beinen dagegen und ein heranzufahrender Transportwagen stösst ebenfalls leicht gegen das mechanische Handrad, was zu Beschädigungen führen kann. Der Vorteil der Vorrichtung liegt insbesondere auch darin, dass diese genannten Nachteile aufgehoben werden.

### Bezugszeichenliste

- 1: Küchengerät
- 2: rechteckiger Behälter
- 3: Behälterrand
- 4: Behälterinnenraum
- 5: Gestell
- 6: mechanisches Handrad
- 7: Bedienstange
- 8: Tragarm
- 9: vertikale Endposition
- 11: Küchengerät
- 12: runder Behälter
- 15: Gestell
- 16: elektronisches Handrad
- 17: Mulde
- 19: gekippte Endposition

## Patentansprüche

1. Vorrichtung mit einem mit Nahrungsmitteln füllbaren Behälter (2; 12), zum Kippen des Behälters in einer Grossküche, mit einem Lager aufweisenden Gestell (5; 15), in das der besagte Behälter (2; 12) verkippbar einhängbar ist, wobei der Behälter (2; 12) mit einem Antriebsmechanismus (16, 17) versehen ist, mit dem sein Neigungswinkel zwischen zwei Endpositionen (9; 19) verstellbar ist, wobei der Antriebsmechanismus eine Steuereinrichtung, einen Elektroantrieb und ein Betätigungselement (16, 17) umfasst, wobei die Steuereinrichtung mit dem Elektroantrieb verbunden ist und dieser mit Ansteuersignalen zur Änderung des besagten Neigungswinkels beaufschlagbar ist, wobei das Betätigungselement (16, 17) mit der Steuereinrichtung verbunden ist und wobei mit dem Betätigungselement (16, 17) an die Steuereinrichtung übermittelbare Steuersignale erzeugbar sind, **dadurch gekennzeichnet, dass** das Betätigungselement (16, 17) ein Drehknopf ist, mit dem drehrichtungs- und/oder drehgeschwindigkeitsabhängig die Steuersignale erzeugbar sind.

2. Vorrichtung nach Anspruch 1, **dadurch gekennzeichnet, dass** die Steuereinrichtung über einen Speicher verfügt, in der Behälterpositionen als Anschläge vorbestimmbar speicherbar sind.

3. Vorrichtung nach Anspruch 1 oder 2, **dadurch gekennzeichnet, dass** das Betätigungselement eine Abfolge von Betätigungsflächen umfasst, mit denen bei Betätigung von einem ein vorbestimmtes drehrichtungsbestimmtes und drehgeschwindigkeitsbestimmendes Steuersignal erzeugbar ist.

4. Vorrichtung nach einem der vorhergehenden Ansprüche, **dadurch gekennzeichnet, dass** das Betätigungselement ferner eine weitere Betätigungsfläche aufweist, mit der eine Schüttelfunktion in Gestalt von Winkeländerungen um die jeweilige Drehposition auslösbar ist.

5. Vorrichtung nach einem der Ansprüche 1 bis 4, **dadurch gekennzeichnet, dass** die Steuereinrichtung eine Drehwinkel abhängige Maximalgeschwindigkeitskurve aufweist, durch die die an den Elektroantrieb übermittelbaren Ansteuersignale limitierbar sind.

6. Vorrichtung nach einem der Ansprüche 1 bis 5, **dadurch gekennzeichnet, dass** die Steuereinrichtung mit Sensoren verbunden ist, mit denen der durch den Elektroantrieb fliessende Strom messbar ist, und dass die Steuereinrichtung bei Überschreiten von vorgegebenen Schwellwerten für diesen Strom den Elektroantrieb ausschaltet.

## Claims

1. Apparatus, which has a container (2; 12) which can be filled with food products, for tilting the container in a large-scale kitchen establishment, having a frame (5; 15) which has bearings and in which the said container (2; 12) can be suspended such that it can be tilted, with the container (2; 12) being provided with a drive mechanism (16, 17) with which the angle of inclination of said container can be adjusted between two end positions (9; 19), with the drive mechanism comprising a control device, an electric drive and an operating element (16, 17), with the control device being connected to the electric drive and it being possible for actuation signals to act on said control device in order to change the said angle of inclination, with the operating element (16, 17) being connected to the control device, and it being possible to use the operating element (16, 17) to generate control signals which can be transmitted to the control device, **characterized in that** the operating element (16, 17) is a rotary knob which can be used to generate the control signals as a function of the direction of rotation and/or the rotation speed.

2. Apparatus according to Claim 1, **characterized in that** the control device has a memory in which container positions can be stored in a predeterminable manner as stops.

3. Apparatus according to Claim 1 or 2, **characterized in that** the operating element comprises a sequence of operating areas which can be used to generate a predetermined control signal which is determined by the direction of rotation and determines the rotation speed when one of the said operating areas is operated.

4. Apparatus according to one of the preceding claims, **characterized in that** the operating element also has a further operating area which can be used to trigger a vibrating function in the form of changes in angle about the respective rotation position.

5. Apparatus according to one of Claims 1 to 4, **characterized in that** the control device has a maximum speed curve which is dependent on the rotation angle and which can be used to limit the actuation signals which can be transmitted to the electric drive.

6. Apparatus according to one of Claims 1 to 5, **characterized in that** the control device is connected to sensors which can be used to measure the current flowing through the electric drive, and **in that** the control device switches off the electric drive when predefined threshold values for this current are exceeded.

## Revendications

1. Dispositif comportant un contenant (2; 12) pouvant être rempli d'aliments, pour basculer le contenant dans une cuisine professionnelle, avec un châssis (5; 15) présentant des paliers, dans lequel ledit contenant (2; 12) peut être suspendu de façon basculante, dans lequel le contenant (2; 12) est muni d'un mécanisme d'entraînement (16, 17) avec lequel son angle d'inclinaison peut être réglé entre deux positions d'extrémité (9; 19), dans lequel le mécanisme d'entraînement comprend un dispositif de commande, un entraînement électrique et un élément d'actionnement (16, 17), dans lequel le dispositif de commande est relié à l'entraînement électrique et celui-ci peut être alimenté par des signaux électriques pour modifier ledit angle d'inclinaison, dans lequel l'élément d'actionnement (16, 17) est relié au dispositif de commande et dans lequel des signaux de commande transmissibles au dispositif de commande peuvent être produits avec l'élément d'actionnement (16, 17), **caractérisé en ce que** l'élément d'actionnement (16, 17) est un bouton rotatif, avec lequel les signaux de commande peuvent être produits en fonction du sens de rotation et/ou de la vitesse de rotation.

2. Dispositif selon la revendication 1, **caractérisé en ce que** le dispositif de commande dispose d'une mémoire, dans laquelle des positions du contenant formant butées peuvent être mémorisées de façon prédéterminable.

3. Dispositif selon la revendication 1 ou 2, **caractérisé en ce que** l'élément d'actionnement comprend une succession de faces d'actionnement, avec lesquelles, lors de l'actionnement, on peut produire un signal de commande prédéterminé déterminé par le sens de rotation et déterminé par la vitesse de rotation.

4. Dispositif selon l'une quelconque des revendications précédentes, **caractérisé en ce que** l'élément d'actionnement comporte en outre une autre face d'actionnement, avec laquelle on peut déclencher une fonction de secousses sous la forme de changements d'angle autour de la position angulaire respective.

5. Dispositif selon l'une quelconque des revendications 1 à 4, **caractérisé en ce que** le dispositif de commande présente une courbe de vitesse de rotation maximale dépendant de l'angle de rotation, au moyen de laquelle on peut limiter les signaux de commande transmissibles à l'entraînement électrique.

6. Dispositif selon l'une quelconque des revendications 1 à 5, **caractérisé en ce que** le dispositif de commande est relié à des capteurs, avec lesquels on peut mesurer le courant circulant à travers l'entraînement électrique, et **en ce que** le dispositif de commande arrête l'entraînement électrique en cas de dépassement de valeurs de seuil prédéterminées pour ce courant.
